# FASCICULE DE BREVET EUROPEEN

(11) **EP 3 921 158 B1**
(45) Date de publication et mention de la délivrance du brevet: **12.06.2024**
(21) Numéro de dépôt: 20709267.7
(22) Date de dépôt: 31.01.2020
(51) Int. Cl.: B32B 41/00, B30B 15/06, B29C 33/40

(54) **PROCÉDÉ DE LAMINAGE D'UN ÉCRAN DE PROTECTION SUR UN SUPPORT D'AFFICHAGE FLEXIBLE ET MATRICE DESTINÉE À LA MISE EN OEUVRE DUDIT PROCÉDÉ DE LAMINAGE**
VERFAHREN ZUM LAMINIEREN EINES SCHUTZSCHIRMS AUF EINEN FLEXIBLEN ANZEIGETRÄGER UND MATRIZE ZUR DURCHFÜHRUNG DES LAMINIERUNGSVERFAHRENS
METHOD FOR LAMINATING A PROTECTIVE SCREEN ONTO A FLEXIBLE DISPLAY SUPPORT AND DIE INTENDED FOR IMPLEMENTING SAID LAMINATION METHOD

(30) Priorité: 05.02.2019 FR 1901118
(43) Date de publication de la demande: 15.12.2021
(73) Titulaire: NOVARES France, 78140 Vélizy-Villacoublay (FR)
(72) Inventeur: ASENSIO, Louis, 06500 MENTON (FR); VANNI, Marcel, 06000 NICE (FR)
(74) Mandataire: Germain Maureau
(86) Numéro de dépôt international: PCT/FR2020/050161
(87) Numéro de publication internationale: WO 2020/161417

(56) Documents cités:
- WO-A1-03/028991
- JP-A- 2013 134 295
- KR-A- 20140 052 714
- KR-B1- 101 492 021
- US-A1- 2012 211 148
- US-A1- 2014 299 269
- US-A1- 2017 129 165
- US-A1- 2018 113 352
- US-A1- 2018 284 564

## Description

La présente invention concerne un procédé de laminage d'un écran de protection sur un support d'affichage flexible, notamment une dalle électronique. L'invention concerne également une matrice destinée à la mise en oeuvre d'un tel procédé de laminage.

Dans le domaine automobile, des panneaux d'affichage lumineux destinés à être intégrés dans l'habitacle du véhicule sont de plus en plus utilisés. Ces panneaux d'affichage peuvent notamment consister en une dalle électronique intégrée dans l'ébénisterie du véhicule et permettant de transmettre des informations lumineuses à l'attention du conducteur ou des passagers au moyen d'un affichage du type LED, LCD ou OLCD par exemple. Cette dalle électronique peut posséder par exemple une interface en communication électronique avec l'ordinateur de bord du véhicule de manière à pouvoir afficher les informations relatives au véhicule lui-même, comme sa vitesse par exemple, ou relatives à l'environnement extérieur, comme la température extérieure. Cette dalle électronique est souvent recouverte par un écran de protection transparent ou translucide de manière à éviter une détérioration prématurée de la dalle du fait des chocs ou contacts pouvant se produire lors de l'utilisation du véhicule. Cet écran de protection est en général formé en verre ou en plastique.

Actuellement, ce type de panneaux d'affichage est généralement plat ou en deux dimensions et se forme par laminage de l'écran de protection sur la dalle par des procédés d'application sous vide ou au moyen de rouleaux. Ces procédés d'application s'avèrent toutefois inadaptés lorsque le panneau d'affichage n'est pas plat ou en deux dimensions. En effet, au cours du procédé de laminage, des bulles d'air se trouvent généralement emprisonnées entre l'écran et la dalle du fait des courbures et reliefs de la dalle et de l'écran. Ces bulles d'air peuvent produire une diffusion de la lumière modifiant le trajet de la lumière, ce qui entraîne un affichage dégradé au niveau des zones où se créent les bulles d'air. Le panneau d'affichage n'est donc pas entièrement satisfaisant.

Un procédé de laminage selon l'état de la technique est décrit dans le document KR 2014 0052714 A. Celui-ci décrit un appareil comprenant une première partie de fixation qui est fixée à un côté d'une fenêtre qui protège un panneau d'affichage ; une seconde partie de fixation qui est faite d'un matériau élastique de résilience, a un côté d'une forme convexe avec un rayon de courbure prédéterminé, et permet à un panneau d'affichage collé au côté inférieur de la fenêtre d'être fixé à un côté d'une forme incurvée, et un corps qui est installé dans la seconde partie de fixation. Le panneau d'affichage peut être fixé à partir de la partie centrale inférieure de la fenêtre lorsque la première partie de fixation s'approche de la seconde fixation et que le panneau d'affichage est fixé au côté inférieur de la fenêtre.

Par ailleurs, le document US 2012/211148 A1 divulgue un procédé de stratification d'une surface d'un matériau flexible sur une surface d'un matériau rigide et incurvé. Le procédé comprend le pressage d'une zone de la surface du matériau flexible dans la surface du matériau rigide, incurvé avec un support pour créer une zone de contact tandis que le matériau flexible est conformé au support, qui a une courbure supérieure à une courbure de la surface du matériau rigide, incurvé ; et le changement de la zone de contact entre la surface du matériau flexible et la surface du matériau rigide, incurvé tout en maintenant une pression sur la zone de contact jusqu'à ce que la surface du matériau flexible et la surface du matériau rigide incurvé soient stratifiées.

L'un des buts de l'invention est de pallier l'inconvénient exposé précédemment en proposant un procédé de laminage évitant l'emprisonnement de bulles d'air entre l'écran de protection et la dalle électronique.

A cet effet, l'invention concerne un procédé de laminage d'un écran de protection sur un support d'affichage flexible, notamment une dalle électronique, comprenant les étapes de :
a) Fourniture d'un écran de protection transparent ou translucide possédant une forme tridimensionnelle courbe;
b) Fourniture d'un support d'affichage flexible possédant une forme tridimensionnelle courbe sensiblement identique à celle de l'écran de protection et, de préférence, recouvert au moins partiellement par un film de colle ;
c) Positionnement et fixation de l'écran de protection (3) sur une partie inférieure (11) de matrice (10), la matrice (10) comprenant par ailleurs une partie supérieure (12) équipée d'un poinçon (18) élastiquement déformable, lesdites parties inférieure et supérieure (11, 12) étant assemblées ensemble de manière à pouvoir se déplacer l'une par rapport à l'autre le long d'une direction de déplacement, des moyens de guidage (15, 16) aptes à assurer le guidage en translation de la partie supérieure (12) et/ou de la partie inférieure (11) le long de ladite direction de déplacement, et des moyens amortisseurs (17) disposés entre la partie inférieure (11) et la partie supérieure (12), lesdits moyens amortisseurs (17) étant destinés à maintenir à distance lesdites parties inférieure et supérieure (11, 12);
d) Positionnement et fixation du support d'affichage (4) sur la partie supérieure (12) de matrice (10), ledit support d'affichage (4) étant positionné de telle sorte qu'il repose sur une surface externe courbe dudit poinçon (18), ladite surface externe possédant alors une forme tridimensionnelle légèrement différente de celle du support d'affichage (4);
e) Eventuellement, dépôt de colle sur le support d'affichage dans le cas où le support d'affichage n'est pas déjà recouvert d'un film de colle ;
f) Déplacement en translation le long de la direction de déplacement de la partie supérieure (12) et/ou de la partie inférieure (11) de matrice (10), dans laquelle l'écran de protection (3) et le support d'affichage (4) ne sont pas en contact l'un avec l'autre au départ et de telle sorte que la partie supérieure (12) de matrice (10) est apte à se rapprocher de la partie inférieure (11) de matrice (10) sous l'effet d'une pression exercée vers le bas sur la partie supérieure (12) de matrice (10);
g) Rapprochement des parties inférieure et supérieure de matrice jusqu'à ce qu'au moins un contact ponctuel se crée entre l'écran de protection et le support d'affichage ;
h) Rapprochement progressif des parties inférieure et supérieure de matrice de telle sorte que la surface de contact entre l'écran de protection et le support d'affichage augmente progressivement jusqu'à atteindre une valeur maximale correspondant à une configuration totalement laminée de l'ensemble formé par l'écran de protection et le support d'affichage, la surface externe du poinçon possédant alors une forme tridimensionnelle sensiblement identique à celle du support d'affichage.

Le procédé de l'invention pourra également comprendre une ou plusieurs des caractéristiques suivantes :
- le poinçon est formé au moins partiellement, et de préférence intégralement, dans un matériau élastomère.
- le poinçon est formé de deux parties, à savoir une partie externe sur laquelle repose le support d'affichage et une partie interne contiguë à la partie externe, la partie externe possédant un coefficient de compressibilité plus faible que la partie interne.
- le poinçon repose sur des ressorts disposés à l'intérieur de la partie supérieure de la matrice de telle sorte que le poinçon peut se déplacer vers le haut aux étapes g) et h).
- que le poinçon repose sur une structure gonflable disposée à l'intérieur de la partie supérieure de la matrice de telle sorte que la position du poinçon peut varier en fonction du volume d'air contenu dans la structure gonflable.
- l'écran de protection est formé par injection d'un matériau plastique.
- le matériau plastique est choisi, de préférence, parmi le polyamide, le poly-méthacrylate de méthyle et le polycarbonate.
- l'écran de protection est formé en verre.
- le rapprochement des parties inférieure et supérieure de matrice aux étapes g) et h) s'opère au moyen d'une presse à l'intérieur de laquelle vient se placer la matrice formée par l'assemblage des parties inférieure et supérieure.
- le procédé comprend une étape intermédiaire g') effectuée avant l'étape g) consistant à mettre en température le poinçon de manière à activer la colle recouvrant le support d'affichage.

L'invention concerne également une matrice destinée à la mise en oeuvre du procédé de laminage tel que décrit ci-dessus, comprenant :
- une partie inférieure destinée à recevoir un écran de protection,
- une partie supérieure équipée d'un poinçon élastiquement déformable, lesdites parties inférieure et supérieure étant assemblées ensemble de manière à pouvoir se déplacer l'une par rapport à l'autre le long d'une direction de déplacement,
- des moyens de guidage aptes à assurer le guidage en translation de la partie supérieure et/ou de la partie inférieure le long de ladite direction de déplacement,
- des moyens amortisseurs disposés entre la partie inférieure et la partie supérieure, lesdits moyens amortisseurs étant destinés à maintenir à distance lesdites parties inférieure et supérieure.

La matrice de l'invention pourra également comprendre une ou plusieurs des caractéristiques suivantes :
- la partie inférieure est conformée de manière à définir un logement possédant une forme tridimensionnelle complémentaire de celle de l'écran de protection.
- le poinçon est muni de moyens de fixation aptes à assurer le positionnement et le maintien d'un support d'affichage flexible, notamment une dalle électronique, sur la partie supérieure.
- les moyens de fixation sont du type mécanique, en particulier sont constitués d'un ou plusieurs clips.
- les moyens de fixation sont du type pneumatique, en particulier sont capables de créer une dépression sous le support d'affichage.
- les moyens de guidage comprennent une pluralité de colonnes solidaires de la partie inférieure et le long desquelles peut coulisser la partie supérieure.
- les moyens amortisseurs sont constitués par des ressorts de compression.

D'autres aspects et avantages de l'invention apparaîtront à la lecture de la description qui suit, donnée à titre d'exemple et faite en référence aux dessins annexés, dans lesquels :
[Fig. 1] est une vue en perspective d'un panneau de garnissage d'un habitacle de véhicule automobile équipé d'un panneau d'affichage tridimensionnel obtenu par le procédé de l'invention ;
[Fig. 2] est une vue en perspective d'un écran de protection utilisable pour la mise en oeuvre du procédé de l'invention ;
[Fig. 3] est une vue en perspective d'un support d'affichage flexible utilisable pour la mise en oeuvre du procédé de l'invention ;
[Fig. 4] est une vue en perspective d'une partie inférieure de matrice utilisable pour la mise en oeuvre du procédé de l'invention ;
[Fig. 5] est une vue en perspective d'une partie supérieure de matrice utilisable pour la mise en oeuvre du procédé de l'invention ;
[Fig. 6] est une en perspective des positions respectives des parties inférieure et supérieure représentées sur les Fig. 4 et 5 au moment de leur assemblage ;
[Fig. 7] est une vue en perspective de la matrice représentée sur la Fig. 6 juste avant sa mise sous presse ;
[Fig. 8a] montre les positions relatives entre l'écran de protection, le support d'affichage et le poinçon au début du rapprochement entre la partie supérieure de matrice et la partie inférieure de matrice ;
[Fig. 8b] montre les positions relatives entre l'écran de protection, le support d'affichage et le poinçon dans une phase intermédiaire de rapprochement entre la partie supérieure de matrice et la partie inférieure de matrice ;
[Fig. 8c] montre les positions relatives entre l'écran de protection, le support d'affichage et le poinçon à la fin du rapprochement entre la partie supérieure de matrice et la partie inférieure de matrice ;
[Fig. 9a] est une vue en perspective d'une première configuration de poinçon utilisable pour la mise en oeuvre du procédé de l'invention;
[Fig. 9b] est une vue en perspective d'une deuxième configuration de poinçon utilisable pour la mise en oeuvre du procédé de l'invention ;
[Fig. 9c] est une vue en perspective d'une troisième configuration de poinçon utilisable pour la mise en oeuvre du procédé de l'invention ;
[Fig. 10a] est une vue de dessous du support d'affichage montrant la progression d'une zone de contact centrale ;
[Fig. 10b] est une vue similaire à la Fig. 10a dans le cas d'une progression de la zone de contact depuis l'un des bords latéraux ;
[Fig. 11] est un schéma simplifié des différentes étapes du procédé de l'invention.

Dans la description, le terme « externe » désigne ce qui est visible depuis l'habitacle du véhicule automobile ou qui est dirigé vers l'intérieur de l'habitacle et le terme « interne » désigne ce qui n'est pas visible depuis l'habitacle ou qui est dirigé à l'extérieur de l'habitacle. Par ailleurs, le terme « longitudinal » est défini selon la plus grande dimension d'un panneau de garnissage et le terme « latéral » est défini selon une direction perpendiculaire à la direction longitudinale.

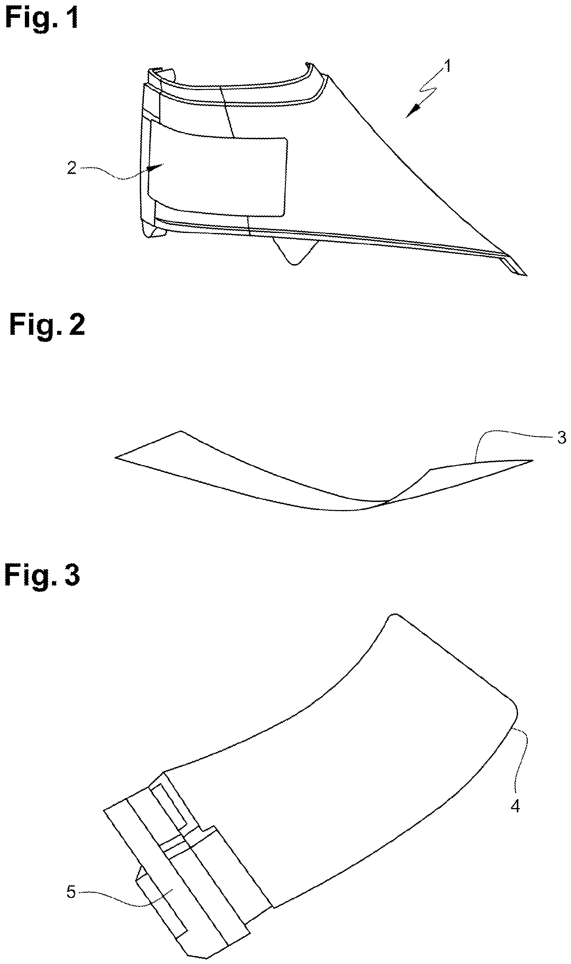

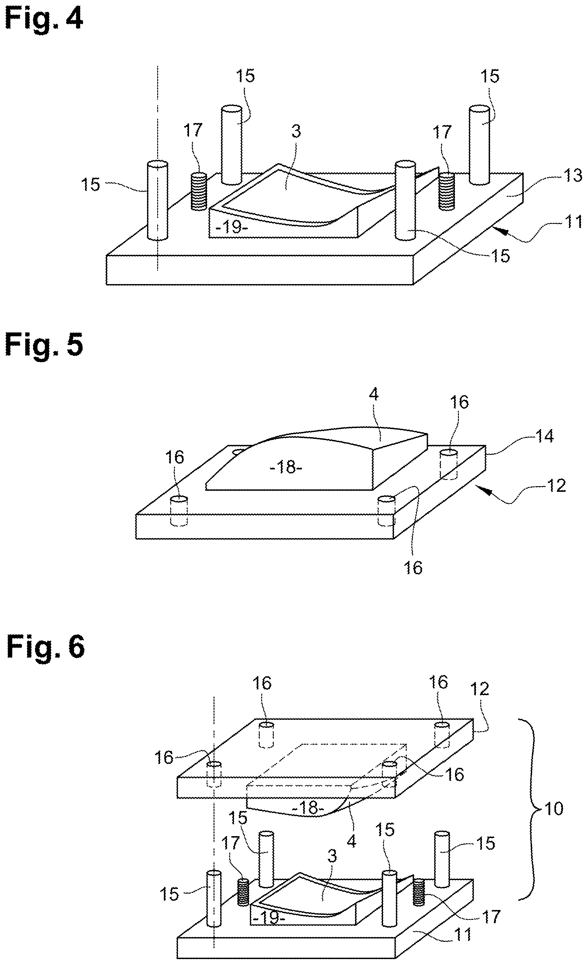

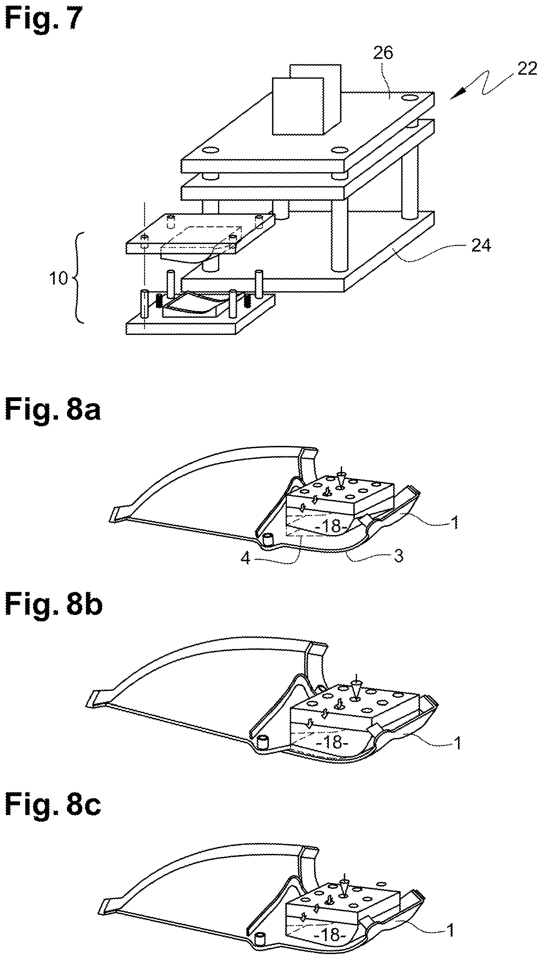

En référence à la Fig. 1, il est représenté un panneau de garnissage 1 d'un véhicule automobile comprenant un panneau d'affichage 2 destiné à délivrer des messages lumineux au conducteur ou aux passagers du véhicule. Ce panneau d'affichage 2 se situe sur une arête courbe du panneau de garnissage 1. Il présente donc un profil tridimensionnel non plat. Comme représenté sur les Fig. 2 et 3, ce panneau d'affichage 2 est formé, d'une part, d'un support d'affichage 4 flexible, de type dalle électronique, et, d'autre part, d'un écran de protection 3 transparent qui est laminé sur la face externe du support d'affichage 4. L'écran de protection 3 pourra posséder sensiblement les mêmes dimensions que le support d'affichage 4, comme dans l'exemple représenté, ou des dimensions supérieures. En particulier, comme représenté sur les Fig. 8a à 8c, l'écran de protection 3 peut également couvrir l'intégralité de la surface externe du panneau de garnissage 1. Cet écran de protection 3 sera notamment formé en verre ou en matière plastique injectée, notamment en polyamide (PA), en poly-méthacrylate de méthyle (PMMA) ou en polycarbonate (PC) ou autre matériau plastique translucide. Comme représenté sur la Fig. 5, le support d'affichage 4 de type dalle électronique est équipé d'une interface de connexion 5 destinée à être reliée de manière filaire, par exemple, à l'ordinateur de bord du véhicule automobile de manière à recevoir des signaux électroniques en provenance dudit ordinateur ou encore à une caméra située à l'extérieur du véhicule. En fonction des signaux électroniques reçus, le support d'affichage 4 délivrera ainsi un message lumineux spécifique qui sera visible depuis l'habitacle du véhicule. Dans une configuration avantageuse, le support d'affichage 4 pourra avantageusement être recouvert sur sa face externe d'une couche adhésive de manière à permettre la fixation de l'écran de protection 3. Cette couche adhésive pourra notamment consister en un film de colle optique transparente, de type OCA, intégré au support d'affichage 4 et protégé par une feuille de protection, la feuille de protection étant destinée à être retirée au moment du laminage. En l'absence de ce film de colle, il sera prévu une étape additionnelle dans le procédé de laminage consistant à déposer une couche de colle optique transparente sur la face externe du support d'affichage 4, préalablement à la mise en contact de l'écran de protection 3 et du support d'affichage 4.

En référence à la Fig. 4, il est représenté une partie inférieure 11 de matrice sur laquelle vient se fixer l'écran de protection 3. Cette partie inférieure 11 de matrice comprend notamment une plaque-support 13 de forme sensiblement rectangulaire à la surface supérieure de laquelle fait saillie, d'une part, une double paire de colonnes 15 disposées respectivement à proximité de chaque sommet de la plaque-support 13, et, d'autre part, une plate-forme de réception 19 destinée à recevoir l'écran de protection 3. La plate-forme de réception 19 possède en particulier une forme complémentaire de celle de l'écran de protection 3. L'écran de protection 3 sera fixé sur ladite plate-forme de réception 19 soit mécaniquement, au moyen d'un ou plusieurs clips par exemple, soit de manière pneumatique, en créant notamment une dépression sous l'écran de protection 3. La plaque-support 13 est également munie d'une paire de trous de réception à l'intérieur desquels vient se loger des moyens amortisseurs 17 du type ressort de compression, lesdits ressorts dépassant de la surface supérieure de la plaque-support 13. Le rôle des moyens amortisseurs 17 sera expliqué plus en détail dans les paragraphes qui suivent.

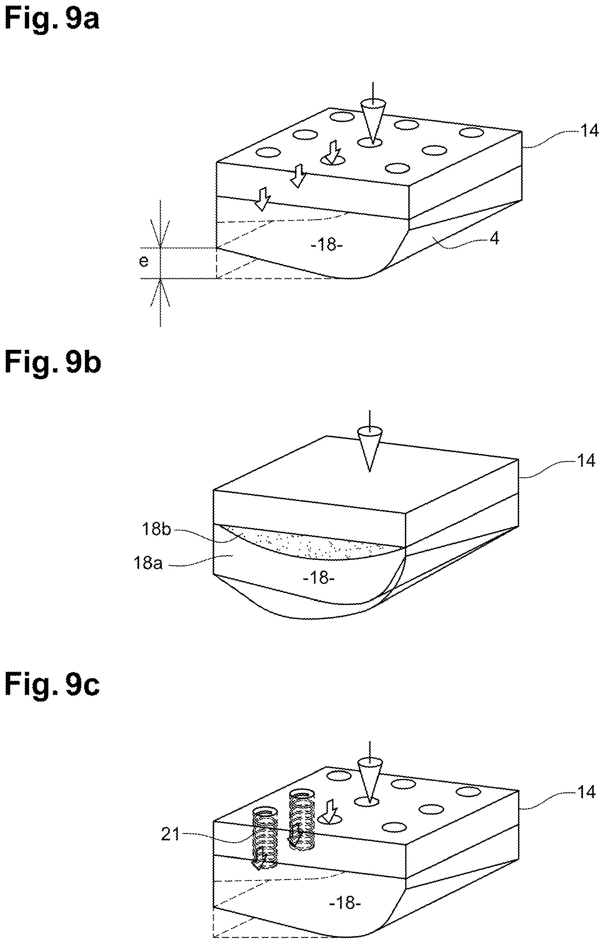

En référence à la Fig. 5, il est représenté une partie supérieure 12 de matrice sur laquelle vient se fixer le support d'affichage 4. Cette partie supérieure 12 de matrice comprend notamment une plaque-support 14 de forme sensiblement rectangulaire à la surface supérieure de laquelle fait saillie un poinçon 18 sur lequel repose le support d'affichage 4. Le poinçon 18 est avantageusement formé dans un matériau élastiquement déformable de sorte que sa forme externe puisse varier en fonction de la pression exercée sur ladite face externe. Lorsqu'il n'est soumis à aucune pression, la forme du poinçon 18 sera légèrement différente de celle du support d'affichage 4, de sorte qu'un écart e pourra exister entre le poinçon 18 et le support d'affichage 4 sur certaines zones du poinçon 18 (voir Fig. 9a par exemple). Dans la configuration des Fig. 5 et 9a, le poinçon 18 est formé d'une seule matière élastomère, telle que du caoutchouc ou du silicone, ladite matière possédant un coefficient de compressibilité élevé. Dans une autre configuration, représentée sur la Fig. 9b, le poinçon 18 pourra être formé de deux parties, à savoir une partie externe 18a sur laquelle repose le support d'affichage 4 et une partie interne 18b contiguë à la partie externe 18a, la partie externe 18a possédant un coefficient de compressibilité plus faible que la partie interne 18b. Dans une autre configuration envisageable, représentée sur la Fig. 9c, le poinçon 18 pourra reposer sur des ressorts 21 disposés à l'intérieur de la plaque-support 14 de la partie supérieure 12 de la matrice de telle sorte que le poinçon 18 peut se déplacer vers le haut lors de la mise en contact entre l'écran de protection 3 et le support d'affichage 4. Ces ressorts 21 peuvent être en matière métallique ou en matière plastique. Dans une autre configuration envisageable, non représentée, ces ressorts 21 seront remplacés par une structure gonflable disposée à l'intérieur de la plaque-support 14.

Le support d'affichage 4 sera fixé sur le poinçon 18 soit mécaniquement, au moyen d'un ou plusieurs clips par exemple, soit de manière pneumatique, en créant notamment une dépression sous le support d'affichage 4. Par ailleurs, la plaque-support 14 est également munie de deux paires de trous traversants 16 positionnés respectivement à proximité de chaque sommet de la plaque-support 14. Ces trous traversants 16 sont destinés à recevoir les colonnes 15 de la partie inférieure 11 de matrice lors de l'assemblage des parties inférieure 11 et supérieure 12 de matrice.

En référence à la Fig.6, il est représenté les positions respectives des parties inférieure 11 et supérieure 12 de matrice au moment de leur assemblage. La partie supérieure 12 de matrice a ainsi été pivotée sur elle-même à 180° de telle sorte que le poinçon 18 soit dirigé vers le bas en direction de la plate-forme de réception 19. Les trous traversants 16 sont alignés avec les colonnes 15. Par la suite, la plaque-support 12 est abaissée en direction de la plaque-support 11 jusqu'à ce qu'elle entre en contact avec les moyens amortisseurs 17. Ces moyens amortisseurs 17 permettent ainsi de conserver une certaine distance entre le poinçon 18 et la plate-forme de réception 19. Ainsi assemblées, les parties inférieure 11 et supérieure 12 de matrice forment une matrice 10.

En référence à la Fig.7, il est représenté la matrice 10 juste avant sa mise sous une presse 22. La presse 22 comporte en particulier une plaque inférieure 24 et une plaque supérieure 26 entre lesquelles vient se positionner la matrice 10, lesdites plaques inférieure 24 et supérieure 26 pouvant se rapprocher l'une de l'autre sous l'action de moyens de déplacement (non représentés). En se rapprochant, les plaques 24 et 26 exercent une pression verticale sur les parties inférieure 11 et supérieure 12 de la matrice 10 qui tend à les rapprocher l'une de l'autre. Ce rapprochement se fait avantageusement de manière progressive comme illustré sur les Fig. 8a à 8c.

En référence à la Fig. 8a, il est représenté les positions relatives entre l'écran de protection 3, le support d'affichage 4 et le poinçon 18 au début du rapprochement entre la partie supérieure 12 de la matrice 10 et la partie inférieure 11 de la matrice 10. Il faut noter que, dans la configuration représentée, l'écran de protection 3 fait partie intégrante du panneau de garnissage 1. Lors de cette phase initiale, le support d'affichage 4 n'est pas encore en contact avec l'écran de protection 3. Comme représenté de manière agrandie sur la Fig. 9a, le poinçon 18 est encore dans son état initial non déformé. L'écran de protection 3 n'épouse pas complétement la surface externe du poinçon 18 de sorte qu'un écart vertical e se crée entre l'un des bords latéraux du support d'affichage 4 et la surface externe du poinçon 18, l'écart entre le support d'affichage 4 et ladite surface externe se réduisant ensuite progressivement le long d'une direction longitudinale.

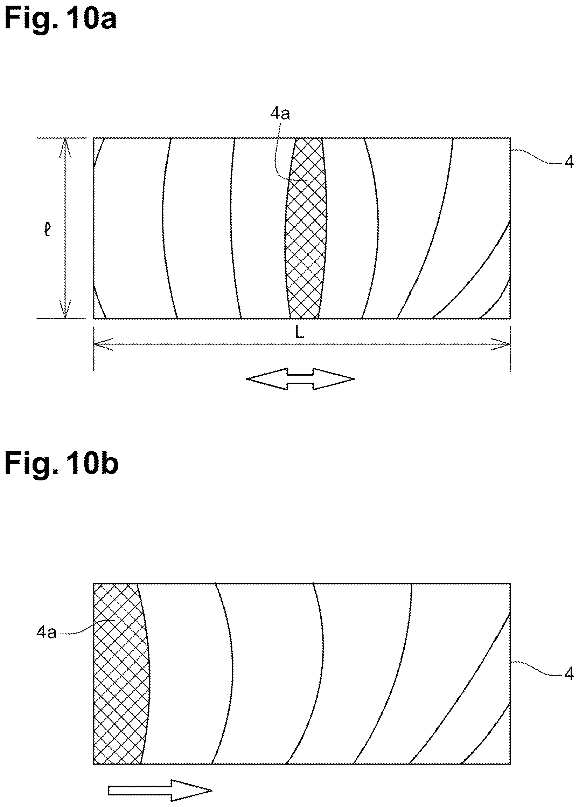

En référence à la Fig. 8b, il est représenté les positions relatives entre l'écran de protection 3, le support d'affichage 4 et le poinçon 18 dans une phase intermédiaire de rapprochement entre la partie supérieure 12 de la matrice 10 et la partie inférieure 11 de la matrice 10. Dans cette phase intermédiaire, le support d'affichage 4 est venu au contact de l'écran de protection 3 au niveau d'une zone de contact 4a s'étendant sur une petite portion centrale de la longueur L du support d'affichage 4 et sur toute sa largeur l, comme illustré sur la Fig. 10a. Selon une variante possible, illustrée sur la Fig. 10b, cette zone de contact 4a pourra également se positionner sur l'un des bords latéraux du support d'affichage 4. Selon une autre variante possible, non représentée, cette zone de contact 4a pourra se limiter sensiblement à un point. Au niveau de cette zone de contact 4a s'est produite une déformation de la surface externe du poinçon 18 de manière à permettre une adhésion uniforme et homogène de l'écran de protection 3 sur le support d'affichage 4 et ainsi éviter la formation de bulles d'air intercalaires. Par la suite, le rapprochement des parties 11 et 12 de la matrice 10 se poursuivant de manière progressive, cette zone de contact 4a s'est étendue dans le sens longitudinal soit en direction des deux bords latéraux du support d'affichage 4, dans la variante représentée sur la Fig. 10a, soit en direction du bord latéral opposé, dans la variante représentée sur la Fig. 10b. Durant ce rapprochement progressif, la surface externe du poinçon 18 s'est déformée progressivement de manière à épouser petit-à-petit le contour externe du support d'affichage 4. Cette déformation progressive permet ainsi d'éviter la formation de bulles d'air intercalaires lors du laminage de l'écran de protection 3 sur le support d'affichage 4.

En référence à la Fig. 8c, il est représenté les positions relatives entre l'écran de protection 3, le support d'affichage 4 et le poinçon 18 à la fin du rapprochement entre la partie supérieure 12 de la matrice 10 et la partie inférieure 11 de la matrice 10. Dans cette phase finale, le support d'affichage 4 est totalement en contact avec l'écran de protection 3, la zone de contact 4a couvrant toute la surface du support d'affichage 4. La surface externe du poinçon 18 possède alors une forme tridimensionnelle sensiblement identique à celle du support d'affichage 4.

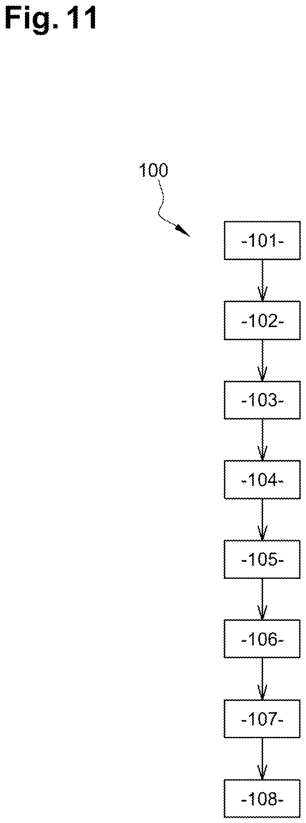

En référence à la Fig. 11, il est représenté dans un diagramme en blocs les différentes étapes du procédé 100 de laminage selon l'invention.

Dans la première étape 101, il est fourni un écran de protection transparent ou translucide et formé soit dans un matériau plastique, soit dans un matériau en verre.

Dans une deuxième étape 102, il est fourni un support d'affichage flexible possédant une forme tridimensionnelle courbe sensiblement identique à celle de l'écran de protection et, de préférence, recouvert au moins partiellement par un film de colle.

Dans une troisième étape 103, l'écran de protection est positionné et fixé sur une partie inférieure de matrice.

Dans une quatrième étape 104, le support d'affichage est positionné et fixé sur une partie supérieure de matrice équipée d'un poinçon élastiquement déformable, ledit support d'affichage étant positionné de telle sorte qu'il repose sur une surface externe courbe dudit poinçon, ladite surface externe possédant alors une forme tridimensionnelle légèrement différente de celle du support d'affichage.

Dans une cinquième étape optionnelle 105, un film de colle est déposé sur le support d'affichage dans le cas où celui-ci n'est pas déjà recouvert d'un film de colle.

Dans une sixième étape 106, la partie supérieure de matrice est assemblée sur la partie inférieure de matrice de manière à former une matrice, dans laquelle l'écran de protection et le support d'affichage ne sont pas en contact l'un avec l'autre au départ et de telle sorte que la partie supérieure de matrice est apte à se rapprocher de la partie inférieure de matrice sous l'effet d'une pression exercée vers le bas sur la partie supérieure de matrice.

Dans une septième étape 107, les parties inférieure et supérieure de matrice sont rapprochées l'une de l'autre jusqu'à ce qu'au moins un contact ponctuel se crée entre l'écran de protection et le support d'affichage.

Dans une huitième étape 108, les parties inférieure et supérieure de matrice sont rapprochées l'une de l'autre de manière progressive de telle sorte que la surface de contact entre l'écran de protection et le support d'affichage augmente progressivement jusqu'à atteindre une valeur maximale correspondant à une configuration totalement laminée de l'ensemble formé par l'écran de protection et le support d'affichage, la surface externe du poinçon possédant alors une forme tridimensionnelle sensiblement identique à celle du support d'affichage.

D'autres étapes additionnelles pourront être prévues en complément des étapes ci-dessus mentionnées. En particulier, il pourra être prévu une étape intermédiaire effectuée avant l'étape 107 consistant à mettre en température le poinçon de manière à activer la colle recouvrant le support d'affichage.

## Revendications

1. Procédé de laminage d'un écran de protection (3) sur un support d'affichage (4) flexible, notamment une dalle électronique, comprenant les étapes de :
a) Fourniture d'un écran de protection (3) transparent ou translucide possédant une forme tridimensionnelle courbe;
b) Fourniture d'un support d'affichage (4) flexible possédant une forme tridimensionnelle courbe sensiblement identique à celle de l'écran de protection (3) et, de préférence, recouvert au moins partiellement par un film de colle ;
c) Positionnement et fixation de l'écran de protection (3) sur une partie inférieure (11) de matrice (10), la matrice (10) comprenant par ailleurs une partie supérieure (12) équipée d'un poinçon (18) élastiquement déformable, lesdites parties inférieure et supérieure (11, 12) étant assemblées ensemble de manière à pouvoir se déplacer l'une par rapport à l'autre le long d'une direction de déplacement, des moyens de guidage (15, 16) aptes à assurer le guidage en translation de la partie supérieure (12) et/ou de la partie inférieure (11) le long de ladite direction de déplacement, et des moyens amortisseurs (17) disposés entre la partie inférieure (11) et la partie supérieure (12), lesdits moyens amortisseurs (17) étant destinés à maintenir à distance lesdites parties inférieure et supérieure (11, 12);
d) Positionnement et fixation du support d'affichage (4) sur la partie supérieure (12) de matrice (10), ledit support d'affichage (4) étant positionné de telle sorte qu'il repose sur une surface externe courbe dudit poinçon (18), ladite surface externe possédant alors une forme tridimensionnelle légèrement différente de celle du support d'affichage (4);
e) Eventuellement, dépôt de colle sur le support d'affichage (4) dans le cas où le support d'affichage (4) n'est pas déjà recouvert d'un film de colle;
f) Déplacement en translation le long de la direction de déplacement de la partie supérieure (12) et/ou de la partie inférieure (11) de matrice (10), dans laquelle l'écran de protection (3) et le support d'affichage (4) ne sont pas en contact l'un avec l'autre au départ et de telle sorte que la partie supérieure (12) de matrice (10) est apte à se rapprocher de la partie inférieure (11) de matrice (10) sous l'effet d'une pression exercée vers le bas sur la partie supérieure (12) de matrice (10);
g) Rapprochement des parties inférieure et supérieure (11, 12) de matrice (10) jusqu'à ce qu'au moins un contact ponctuel se crée entre l'écran de protection (3) et le support d'affichage (4);
h) Rapprochement progressif des parties inférieure et supérieure (11, 12) de matrice (10) de telle sorte que la surface de contact (4a) entre l'écran de protection (3) et le support d'affichage (4) augmente progressivement jusqu'à atteindre une valeur maximale correspondant à une configuration totalement laminée de l'ensemble formé par l'écran de protection (3) et le support d'affichage (4), la surface externe du poinçon (18) possédant alors une forme tridimensionnelle sensiblement identique à celle du support d'affichage (4).

2. Procédé selon la revendication 1, **caractérisé en ce que** le poinçon (18) est formé au moins partiellement, et de préférence intégralement, dans un matériau élastomère.

3. Procédé selon la revendication 1 ou 2, **caractérisé en ce que** le poinçon (18) est formé de deux parties, à savoir une partie externe (18a) sur laquelle repose le support d'affichage (4) et une partie interne (18b) contiguë à la partie externe (18a), la partie externe (18a) possédant un coefficient de compressibilité plus faible que la partie interne (18b).

4. Procédé selon la revendication 1 ou 2, **caractérisé en ce que** le poinçon (18) repose sur des ressorts (21) disposés à l'intérieur de la partie supérieure (12) de matrice (10) de telle sorte que le poinçon (18) peut se déplacer vers le haut aux étapes g) et h).

5. Procédé selon la revendication 1 ou 2, **caractérisé en ce que** le poinçon (18) repose sur une structure gonflable disposée à l'intérieur de la partie supérieure (12) de matrice (10) de telle sorte que la position du poinçon (18) peut varier en fonction du volume d'air contenu dans la structure gonflable.

6. Procédé selon l'une des revendications précédentes, **caractérisé en ce que** l'écran de protection (3) est formé par injection d'un matériau plastique.

7. Procédé selon la revendication 6, **caractérisé en ce que** le matériau plastique est choisi parmi le polyamide, le poly-méthacrylate de méthyle et le polycarbonate.

8. Procédé selon l'une des revendications 1 à 5, **caractérisé en ce que** l'écran de protection (3) est formé en verre.

9. Procédé selon l'une des revendications précédentes, **caractérisé en ce que** le rapprochement des parties inférieure et supérieure (11, 12) de matrice (10) aux étapes g) et h) s'opère au moyen d'une presse (22) à l'intérieur de laquelle vient se placer la matrice (10) formée par l'assemblage des parties inférieure et supérieure (11, 12).

10. Procédé selon l'une des revendications précédentes, **caractérisé en ce qu'**il comprend une étape intermédiaire g') effectuée avant l'étape g) consistant à mettre en température le poinçon (18) de manière à activer la colle recouvrant le support d'affichage (4).

11. Matrice (10) destinée à la mise en oeuvre du procédé de laminage de l'une des revendications précédentes, comprenant :
- une partie inférieure (11) destinée à recevoir un écran de protection (3),
- une partie supérieure (12) équipée d'un poinçon (18) élastiquement déformable, lesdites parties inférieure et supérieure (11, 12) étant assemblées ensemble de manière à pouvoir se déplacer l'une par rapport à l'autre le long d'une direction de déplacement,
- des moyens de guidage (15, 16) aptes à assurer le guidage en translation de la partie supérieure (12) et/ou de la partie inférieure (11) le long de ladite direction de déplacement,
- des moyens amortisseurs (17) disposés entre la partie inférieure (11) et la partie supérieure (12), lesdits moyens amortisseurs (17) étant destinés à maintenir à distance lesdites parties inférieure et supérieure (11, 12).

12. Matrice (10) selon la revendication 11, **caractérisée en ce que** la partie inférieure (11) est conformée de manière à définir un logement possédant une forme tridimensionnelle complémentaire de celle de l'écran de protection (3).

13. Matrice (10) selon la revendication 11 ou 12, **caractérisée en ce que** le poinçon (18) est muni de moyens de fixation aptes à assurer le positionnement et le maintien d'un support d'affichage (4) flexible, notamment une dalle électronique, sur la partie supérieure (12).

14. Matrice (10) selon la revendication 13, **caractérisée en ce que** les moyens de fixation sont du type mécanique, en particulier sont constitués d'un ou plusieurs clips.

15. Matrice (10) selon la revendication 13, **caractérisée en ce que** les moyens de fixation sont du type pneumatique, en particulier sont capables de créer une dépression sous le support d'affichage (4).

16. Matrice (10) selon l'une des revendications 11 à 15, **caractérisée en ce que** les moyens de guidage (15, 16) comprennent une pluralité de colonnes (15) solidaires de la partie inférieure (11) et le long desquelles peut coulisser la partie supérieure (12).

17. Matrice (10) selon l'une des revendications 11 à 16, **caractérisée en ce que** les moyens amortisseurs sont constitués par des ressorts de compression (17).

## Patentansprüche

1. Verfahren zum Laminieren eines Schutzschirms (3) auf einen flexiblen Anzeigeträger (4), insbesondere einem elektronischen Panels, umfassend die folgenden Schritte:
a) Bereitstellen eines transparenten oder lichtdurchlässigen Schutzschirms (3), der eine gekrümmte dreidimensionale Form besitzt;
b) Bereitstellen eines flexiblen Anzeigeträgers (4), der eine gekrümmte dreidimensionale Form besitzt, die im Wesentlichen mit der des Schutzbildschirms (3) identisch ist und vorzugsweise mindestens teilweise von einem Klebstofffilm bedeckt ist;
c) Positionieren und Befestigen des Schutzschirms (3) auf einem unteren Teil (11) der Matrize (10), wobei die Matrize (10) außerdem einen oberen Teil (12), der mit einem elastisch verformbaren Stempel (18) ausgestattet ist, wobei der untere und der obere Teil (11, 12) so zusammengebaut sind, dass sie in Bezug zueinander entlang einer Bewegungsrichtung bewegt werden können, Führungsmittel (15, 16), die dazu geeignet sind, die translatorische Führung des oberen Teils (12) und/oder des unteren Teils (11) entlang der Bewegungsrichtung zu gewährleisten, und Dämpfungsmittel (17) umfasst, die zwischen dem unteren Teil (11) und dem oberen Teil (12) angeordnet sind, wobei die Dämpfungsmittel (17) dazu bestimmt sind, den unteren und den oberen Teil (11, 12) auf Abstand zu halten;
d) Positionieren und Befestigen des Anzeigeträgers (4) auf dem oberen Teil (12) der Matrize (10), wobei der Anzeigeträger (4) so positioniert wird, dass er auf einer gekrümmten Außenfläche des Stempels (18) aufliegt, wobei die Außenfläche dann eine dreidimensionale Form besitzt, die sich leicht von der des Anzeigeträgers (4) unterscheidet;
e) optional Auftragen von Klebstoff auf den Anzeigeträger (4), falls der Anzeigeträger (4) nicht bereits mit einem Klebstofffilm bedeckt ist;
f) translatorisches Bewegen des oberen Teils (12) und/oder des unteren Teils (11) der Matrize (10) entlang der Bewegungsrichtung, wobei der Schutzschirm (3) und der Anzeigeträger (4) am Anfang nicht miteinander in Kontakt stehen, und so dass der obere Teil (12) der Matrize (10) dazu geeignet ist, mit dem unteren Teil (11) der Matrize (10) unter der Einwirkung eines Drucks zusammengeführt zu werden, der auf den oberen Teil (12) der Matrize (10) nach unten ausgeübt wird;
g) Zusammenführen des unteren und des oberen Teils (11, 12) der Matrize (10), bis mindestens ein Punktkontakt zwischen dem Schutzschirm (3) und dem Anzeigeträger (4) entsteht;
h) schrittweises Zusammenführen des unteren und des oberen Teils (11, 12) der Matrize (10), so dass die Kontaktfläche (4a) zwischen dem Schutzschirm (3) und dem Anzeigeträger (4) schrittweise zunimmt, bis ein Maximalwert erreicht wird, der einer vollständig laminierten Konfiguration der Anordnung entspricht, die aus dem Schutzschirm (3) und dem Anzeigeträger (4) ausgebildet wird, wobei die Außenfläche des Stempels (18) dann eine dreidimensionale Form besitzt, die im Wesentlichen mit der des Anzeigeträgers (4) identisch ist.

2. Verfahren nach Anspruch 1, **dadurch gekennzeichnet, dass** der Stempel (18) mindestens teilweise, und vorzugsweise vollständig, aus einem elastomeren Material ausgebildet ist.

3. Verfahren nach Anspruch 1 oder 2, **dadurch gekennzeichnet, dass** der Stempel (18) aus zwei Teilen ausgebildet ist, nämlich einem äußeren Teil (18a), auf dem der Anzeigeträger (4) aufliegt, und einem inneren Teil (18b), der an den äußeren Teil (18a) angrenzt, wobei der äußere Teil (18a) einen niedrigeren Kompressibilitätskoeffizienten als der innere Teil (18b) besitzt.

4. Verfahren nach Anspruch 1 oder 2, **dadurch gekennzeichnet, dass** der Stempel (18) auf Federn (21) aufliegt, die innerhalb des oberen Teils (12) der Matrize (10) angeordnet sind, so dass der Stempel (18) in den Schritten g) und h) nach oben bewegt werden kann.

5. Verfahren nach Anspruch 1 oder 2, **dadurch gekennzeichnet, dass** der Stempel (18) auf einer aufblasbaren Struktur aufliegt, die innerhalb des oberen Teils (12) der Matrize (10) angeordnet sind, so dass die Position des Stempels (18) entsprechend des in der aufblasbaren Struktur enthaltenen Luftvolumens variieren kann.

6. Verfahren nach einem der vorhergehenden Ansprüche, **dadurch gekennzeichnet, dass** der Schutzschirm (3) durch Einspritzen eines Kunststoffmaterials ausgebildet wird.

7. Verfahren nach Anspruch 6, **dadurch gekennzeichnet, dass** das Kunststoffmaterial aus Polyamid, Polymethylmethacrylat und Polycarbonat ausgewählt wird.

8. Verfahren nach einem der Ansprüche 1 bis 5, **dadurch gekennzeichnet, dass** der Schutzschirm (3) aus Glas ausgebildet ist.

9. Verfahren nach einem der vorhergehenden Ansprüche, **dadurch gekennzeichnet, dass** das Zusammenführen des unteren und des oberen Teils (11, 12) der Matrize (10) in den Schritten g) und h) mittels einer Presse (22) erfolgt, in deren Inneren die Matrize (10) platziert wird, die durch das Zusammenbauen des unteren und des oberen Teils (11, 12) ausgebildet wird.

10. Verfahren nach einem der vorhergehenden Ansprüche, **dadurch gekennzeichnet, dass** es einen Zwischenschritt g') umfasst, der vor Schritt g) durchgeführt wird und darin besteht, den Stempel (18) zu temperieren, um den Klebstoff zu aktivieren, der den Anzeigeträger (4) bedeckt.

11. Matrize (10), die dazu bestimmt ist, das Laminierverfahren nach einem der vorhergehenden Ansprüche durchzuführen, umfassend:
- einen unteren Teil (11), der dazu bestimmt ist, einen Schutzschirm (3) aufzunehmen,
- einen oberen Teil (12), der mit einem elastisch verformbaren Stempel (18) ausgestattet ist, wobei der untere und der obere Teil (11, 12) so zusammengebaut sind, dass sie in Bezug zueinander entlang einer Bewegungsrichtung bewegt werden können,
- Führungsmittel (15, 16), die dazu geeignet sind, die translatorische Führung des oberen Teils (12) und/oder des unteren Teils (11) entlang der Bewegungsrichtung zu gewährleisten,
- Dämpfungsmittel (17), die zwischen dem unteren Teil (11) und dem oberen Teil (12) angeordnet sind, wobei die Dämpfungsmittel (17) dazu bestimmt sind, den unteren und den oberen Teil (11, 12) auf Abstand zu halten.

12. Matrize (10) nach Anspruch 11, **dadurch gekennzeichnet, dass** der untere Teil (11) so geformt ist, dass er ein Gehäuse definiert, das eine dreidimensionale Form besitzt, die komplementär zu der des Schutzschirms (3) ist.

13. Matrize (10) nach Anspruch 11 oder 12, **dadurch gekennzeichnet, dass** der Stempel (18) mit Befestigungsmitteln versehen ist, die dazu geeignet sind, das Positionieren und Halten eines flexiblen Anzeigeträgers (4), insbesondere eines elektronischen Panels, auf dem oberen Teil (12) zu gewährleisten.

14. Matrize (10) nach Anspruch 13, **dadurch gekennzeichnet, dass** die Befestigungsmittel vom mechanischen Typ sind und insbesondere aus einer oder mehreren Klammern bestehen.

15. Matrize (10) nach Anspruch 13, **dadurch gekennzeichnet, dass** die Befestigungsmittel vom pneumatischen Typ sind und insbesondere ein Vakuum unter dem Anzeigeträger (4) erzeugen können.

16. Matrize (10) nach einem der Ansprüche 11 bis 15, **dadurch gekennzeichnet, dass** die Führungsmittel (15, 16) eine Vielzahl von Säulen (15) umfassen, die fest mit dem unteren Teil (11) verbunden sind und entlang derer der obere Teil (12) gleiten kann.

17. Matrize (10) nach einem der Ansprüche 11 bis 16, **dadurch gekennzeichnet, dass** die Dämpfungsmittel aus Druckfedern (17) bestehen.

## Claims

1. A method for laminating a protective screen (3) on a flexible display support (4), in particular an electronic panel, comprising the steps of:
a) Providing a transparent or translucent protective screen (3) having a curved three-dimensional shape;
b) Providing a flexible display support (4) having a curved three-dimensional shape substantially identical to that of the protective screen (3) and, preferably, covered at least partially by a film of glue;
c) Positioning and fixing the protective screen (3) on a lower portion (11) of a matrix (10), the matrix (10) further comprising an upper portion (12) equipped with an elastically deformable punch (18), said lower and upper portions (11, 12) being assembled together so as to be able to be displaced relative to each other along a displacement direction, guide means (15, 16) capable of ensuring the guidance in translation of the upper portion (12) and/or the lower portion (11) along said displacement direction, and damping means (17) arranged between the lower portion (11) and the upper portion (12), said damping means (17) being intended to maintain said lower and upper portions (11, 12) at a distance;
d) Positioning and fixing the display support (4) on the upper portion (12) of the matrix (10), said display support (4) being positioned so that it rests on a curved outer surface of said punch (18), said outer surface then having a three-dimensional shape slightly different from that of the display support (4);
e) Optionally, depositing glue on the display support (4) in the case where the display support (4) is not already covered with a film of glue;
f) Translational displacing along the displacement direction the upper portion (12) and/or the lower portion (11) of matrix (10), in which the protective screen (3) and the display support (4) are not in contact with each other initially and such that the upper portion (12) of the matrix (10) is able to come closer to the lower portion (11) of the matrix (10) under the effect of downward pressure on the upper portion (12) of the matrix (10);
g) Bringing together the lower and upper portions (11, 12) of the matrix (10) until at least one point contact is created between the protective screen (3) and the display support (4);
h) Gradually bringing closer the lower and upper portions (11, 12) of the matrix (10) so that the contact surface (4a) between the protective screen (3) and the display support (4) gradually increases until a maximum value is reached corresponding to a fully laminated configuration of the assembly formed by the protective screen (3) and the display support (4), the outer surface of the punch (18) then having a three-dimensional shape substantially identical to that of the display support (4).

2. The method according to claim 1, **characterized in that** the punch (18) is at least partially, and preferably entirely, formed in an elastomeric material.

3. The method according to claim 1 or 2, **characterized in that** the punch (18) is formed of two portions, namely an outer portion (18a) on which rests the display support (4) and an inner portion (18b) adjacent to the outer portion (18a), the outer portion (18a) having a compressibility coefficient lower than the inner portion (18b).

4. The method according to claim 1 or 2, **characterized in that** the punch (18) rests on springs (21) disposed inside the upper portion (12) of the matrix (10) so that the punch (18) can be displaced upwards in steps g) and h).

5. The method according to claim 1 or 2, **characterized in that** the punch (18) rests on an inflatable structure disposed inside the upper portion (12) of the matrix (10) so that the position of the punch (18) may vary depending on the volume of air contained in the inflatable structure.

6. The method according to any of the preceding claims, **characterized in that** the protective screen (3) is formed by injection of a plastic material.

7. The method according to claim 6, **characterized in that** the plastic material is selected from polyamide, poly(methyl) methacrylate and polycarbonate.

8. The method according to any of claims 1 to 5, **characterized in that** the protective screen (3) is formed of glass.

9. The method according to any of the preceding claims, **characterized in that** the approximation of the lower and upper portions (11, 12) of the matrix (10) in steps g) and h) takes place by means of a press (22) inside which is placed the matrix (10) formed by the assembly of the lower and upper portions (11, 12).

10. The method according to any of the preceding claims, **characterized in that** it comprises an intermediate step g') carried out before step g) consisting in bringing the punch (18) to temperature so as to activate the glue covering the display support (4).

11. A matrix (10) intended for implementing the laminating method of any of the preceding claims, comprising:
- a lower portion (11) intended to receive a protective screen (3),
- an upper portion (12) equipped with an elastically deformable punch (18), said lower and upper portions (11, 12) being assembled together so as to be able to be displaced relative to each other along a displacement direction,
- guide means (15, 16) capable of ensuring the translational guidance of the upper portion (12) and/or lower portion (11) along said displacement direction,
- damping means (17) disposed between the lower portion (11) and the upper portion (12), said damping means (17) being intended to maintain said lower and upper portions (11,12) at a distance.

12. The matrix (10) according to claim 11, **characterized in that** the lower portion (11) is shaped so as to define a housing having a three-dimensional shape complementary to that of the protective screen (3).

13. The matrix (10) according to claim 11 or 12, **characterized in that** the punch (18) is provided with fixing means suitable for positioning and maintaining a flexible display support (4), in particular an electronic panel, on the upper portion (12).

14. The matrix (10) according to claim 13, **characterized in that** the fixing means are of the mechanical type, in particular consist of one or more clips.

15. The matrix (10) according to claim 13, **characterized in that** the fixing means are of the pneumatic type, in particular are capable of creating a vacuum under the display support (4).

16. The matrix (10) according to any of claims 11 to 15, **characterized in that** the guide means (15, 16) comprise a plurality of columns (15) secured to the lower portion (11) and along which the upper portion (12) can slide.

17. The matrix (10) according to any of claims 11 to 16, **characterized in that** the damping means are constituted by compression springs (17).
